## Europäisches Patentamt

## European Patent Office

## Office européen des brevets

(19)

(11) Veröffentlichungsnummer: **0 038 040**
**B1**

(12) ## EUROPÄISCHE PATENTSCHRIFT

(45) Veröffentlichungstag der Patentschrift:
02.01.85

(51) Int. Cl.³: **B 65 G 19/28**

(21) Anmeldenummer: **81102760.6**

(22) Anmeldetag: **10.04.81**

(54) **Verbindung für die Rinnen eines Bergbau-Kratzförderers.**

(30) Priorität: **10.04.80 PL 223399**

(43) Veröffentlichungstag der Anmeldung:
**21.10.81 Patentblatt 81/42**

(45) Bekanntmachung des Hinweises auf die Patenterteilung:
**02.01.85 Patentblatt 85/1**

(84) Benannte Vertragsstaaten:
**DE FR GB**

(56) Entgegenhaltungen:
**DE - A - 2 819 956**
**DE - B - 2 153 181**
**FR - A - 2 361 288**

(73) Patentinhaber: **Rybnicka Fabryka Maszyn RYFAMA Przedsiebiorstwo Panstwowe, Ul Boleslawa Chrobrego 39, 44-201 Rybnik (PL)**

(72) Erfinder: **Skolik, Wojciech, ul. Kosciuszki 34/26, Rybnik (PL)**
Erfinder: **Wodecki, Józef, ul. Kosciuszki 34/49, Rybnik (PL)**
Erfinder: **Gortat, Zenon, ul. Wyzwolenia 29, Rybnik (PL)**
Erfinder: **Szyngiel, Stanislaw, ul. 3-Maja 57, Leszczyny (PL)**
Erfinder: **Bulenda, Andrzej, ul. Pod Lasem 66, Rybnik (PL)**
Erfinder: **Sopora, Piotr, ul. Budowlanych 41, Rybnik (PL)**

(74) Vertreter: **Lehn, Werner, Dipl.-Ing. et al, Hoffmann, Eitle & Partner Patentanwälte Arabellastrasse 4 (Sternhaus), D-8000 München 81 (DE)**

EP 0 038 040 B1

## Beschreibung

Die Erfindung bezieht sich auf eine Verbindung für die Rinnen eines Bergbau-Kratzförderers, der einen Profil-Verbinder in Form eines verlängerten Schaftes mit Anstauchungen an seinen beiden Enden zur Kupplung des Verbinders mit den Seitenwänden der Enden der zu verbindenden Rinnen aufweist, wobei eine Anstauchung eine Falle und die andere ein Feststell-Endstück darstellt und welche Anstauchungen an ihrer Schaftseite von ebenen mit dem Schaft Flanschansätze bildenden Wänden begrenzt sind, die zueinander konvergent in Richtung der Rinnenwand geneigt sind und zwei Fallen-Hängeeisen enthalten, von welchen jedes an den Seitenwänden der benachbarten Rinnen an dem Berührungsrand derselben befestig ist und einen nach außen offenen Sitz aufweist, dessen Querschnittsform im wesentlichen aus einem Rechteck und aus einem an der Seite des benachbarten Hängeeisens angeordneten Trapez besteht.

Bekannte Verbindungen zum Verbinden von Bergbau-Kratzförderern sind so aufgebaut, daß sie an den Enden der Seitenwände der zu verbindenden Rinnen befestigte Hängeeisen aufweisen, in denen lösbare Verbindungselemente wie Schrauben, Bolzen oder besondere Profil-Kupplungsglieder eingesetzt sind. Die Bestandteile dieser Verbindungen sind in entsprechenden Nischen in den Rinnen-Seitenwänden untergebracht. Diese Bedingung muß erfüllt sein, um eine reibungslose Durchfahrt der abbauenden Maschine im Streb zu gewährleisten, für welche der Kratzförderer eine Laufbahn bildet, über welche sich die abbauende Maschine entlang der Stirnseite der Abbauwand bewegt. Mit der Leistungs- und Gewichtszunahme der Abbaumaschinen sowie größeren, von den Vorschubvorrichtungen des Förderers ausgeübten Kräfte wachsen auch die Festigkeitsanforderungen an den Rinnenverbindungen. Als am nützlichsten, weil widerstandsfähigsten haben sich unter solchen Umständen mit Profil-Kupplungselementen ausgestattete Verbindungen erwiesen, wie z. B. nach der FR-A-2 361 288, wo die Kupplungskomponente ein Profil-Verbindungsstück mit beidseitig angestauchten Endstücken ist, die zur Befestigung der Hängeeisen in taschenförmigen Aussparungen dienen. Eine derartige Lösung stellt eine hohe Festigkeit der Verbindung bei relativ geringer Breite sicher, welche durch Notwendigkeit der Anpassung an die Aussparungen in Rinnen-Seitenwänden bedingt ist.

Die Hauptschwierigkeit bei Verbindungen dieser Art ist das Problem, die Endstücke eines Verbinders gut und einfach in die Hängeeisenspitze einsetzen zu können und ein selbsttätiges Lösen von den Hängeeisen zu verhindern. Bei den bekannten Lösungen dient zu diesem Zweck die Ausstattung des Verbinders mit herausragenden Sperrklinken und Riegelvorsprüngen, welche ihrerseits mit elastischen Klammern gesichert sind. Diese Sicherungen fügen sich nicht mehr in den Umriß der Verbindungs-Hängeeisen ein, sondern stützen sich gegen äußere Hängeeisen ab, welche zur Befestigung von Zusatzausstattungen des Förderers wie Zuhaltungen oder Ladekeilen dienen.

Die bisher bekannten Verbindungen weisen folgende Nachteile auf:

Schwierigkeiten bei der Montage der Verbindungen, insbesondere beim Einsetzen des Profil-Verbinders und bei der richtigen Sicherung desselben,
geringe Festigkeit der Verbindung von kurzen Hängeeisen mit der Rinnen-Seitenwand, sowie
zeitaufwendige Herstellung und hohe Herstellungskosten.

Aufgabe der Erfindung ist die Schaffung einer Verbindung der eingangs genannten bekannten Gattung, welche frei von diesen Nachteilen ist.

Diese Aufgabe wird erfindungsgemäß dadurch gelöst, daß die Stirnseite der Falle Keilform hat und mit der Seitenwand der Rinne an der Seite der Teilungsebene einen spitzen Winkel bildet, und das Feststell-Endstück an der Seite der Wand des Sitzes des Hängeeisens eine zur Seitenwand der Rinne parallele Ausnehmung aufweist, in der ein elastisches, sich an der Wand abstützendes Formstück besitzt, wobei die Wände der Hängeeisen gegen die Seitenwände der Rinnen in deren Richtung konvergent und die Wände zu diesen Seitenwänden divergent geneigt sind.

Bei der erfindungsgemäßen Lösung erstrecken sich die außen und querflanschartig abgesetzten Wände der Anstauchungen sowie die damit zusammenwirkenden Wände der Hängeeisen im Verhältnis zu der Teilungsebene der Rinnen schräg und konvergierend in Richtung der Rinnenteilung. Diese Konvergenz verursacht, daß am Stoß dieser Wände eine Querkraftkomponente auftritt, welche den Verbinder in Richtung der Rinnenwand drückt. Eine der Anstauchungen hat die Form einer nach außen konvergierenden Falle, die in einer Durchgangsöffnung des Fallen-Hängeeisens untergebracht ist. Die andere Stauchung liegt in einem durchgehenden Sitz des Hängeeisens und ist gegen selbsttätiges Herausschlüpfen aus dem Sitz durch ein elastisches Formstück gesichert. Nach dem Einführen der Anstauchung durch den schmalen Einlaß des Sitzes wird das Formstück infolge der Neigung der Sitzwandung und seiner allmählichen Dickenzunahme entspannt und spreizt sich aus. Dies ermöglicht die Ausbildung des Formstückkopfes durch Hämmern mit einem spitzen Ende gegen die geneigte Sitzwand gerichteten Ende. Das Fallen-Hängeeisen hat eine Durchgangsöffnung, in welcher die Verbinderfalle sitzt. Die Innenwand dieser Öffnung, die mit der Stirnseite der Falle zusammenwirkt, kann nach außen stark geneigt sein, wobei die Lage derselben derart gewählt sein kann, daß ein Einführen der Falle mit zur Fördererachse geneigter Position des Verbinders ermöglicht sowie ein Herausschlüpfen der Falle aus der Öffnung verhindert wird, wenn der Verbinder mit dem Hängeeisen gekuppelt ist, um in jeder Lage den Eingriff des Hängeeisens mit der Seitenwand einer benachbarten Rinne beizubehalten sowie die Übertragung sämtlicher Belastungen durch dieses Hängeeisen sicherzustellen. Es kann in Richtung dieser Rinne um eine Länge vorragen, die größer ist als das Gesamtspiel des Verbinders in den Hängeeisen. Um das Material voll auszunützen sowie ein optimales Zusammenwirken des Verbinders mit den Hängeeisen sicherzustellen, kann der Verbindung im Querschnitt eine annähernd trapezartige Form haben, wobei das Trapez ohne Spiel mit der schmäleren Basis zum Rinneninnern gerichtet ist und die Trapeze der Falle und des Feststell-Endstücks umgekehrt gerichtet sind.

Die Vorteile der erfindungsgemäßen Lösung sind folgende:

Kompakter Aufbau, Möglichkeit der Herstellung der Verbindungsteile ohne spanabhebende Bearbeitung, hohe Festigkeit der Verbindung, Betriebssicherheit, einfache Montage und Wirtschaftlichkeit des Herstellungsvorganges.

Ein Ausführungsbeispiel der erfindungsgemäßen Verbindung ist im folgenden anhand der Zeichnungen näher erläutert. In den Zeichnungen zeigt

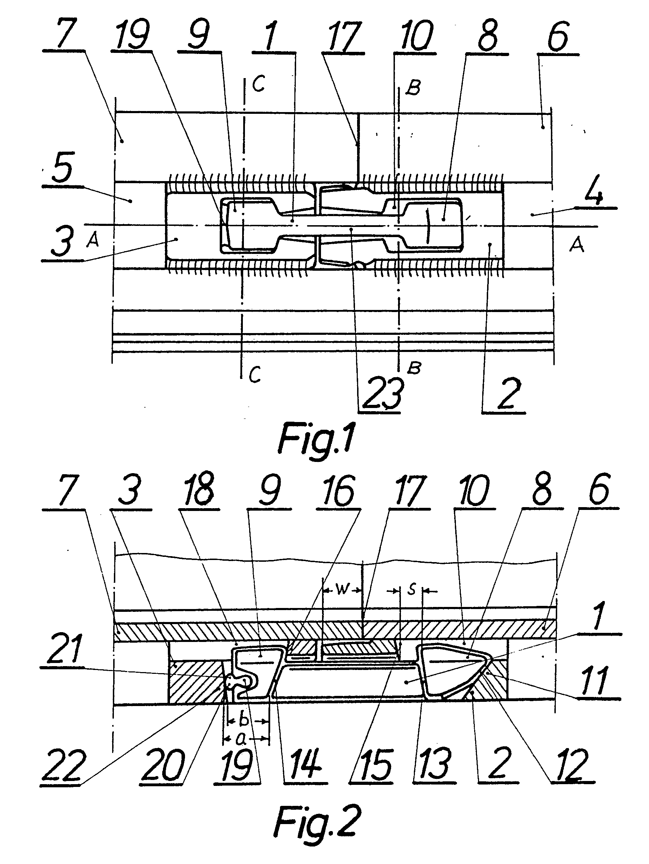

Fig. 1 eine Seitenansicht der Verbindung,

Fig. 2 einen Längsschnitt der Verbindung entlang der Linie A-A in Fig. 1,

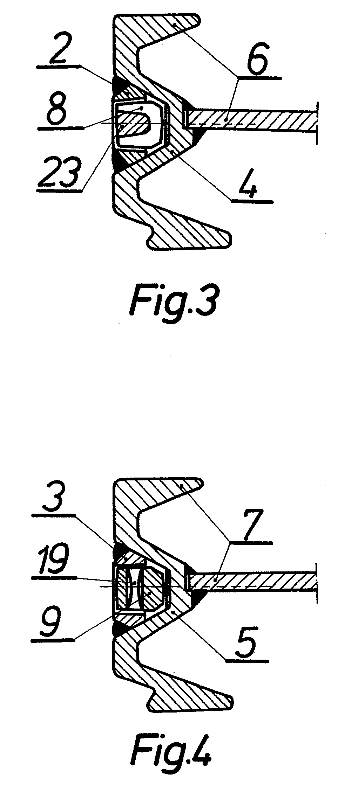

Fig. 3 einen Querschnitt der Verbindung entlang der Linie B-B in Fig. 1 und

Fig. 4 einen Querschnitt der Verbindung über das Feststell-Endstück des Verbinders entlang der Linie C-C in Fig. 1.

Die Verbindung gemäß der Erfindung setzt sich zusammen aus einem Profil-Verbinder 1, welcher lösbar in Hängeeisen 2 und 3 eingesetzt ist, die an den Seitenwänden 4 und 5 von zu verbindenden Rinnen 6 und 7 befestigt sind. Verbinder 1 hat angestauchte Enden, von denen eines als Falle 8 und das andere als Feststell-Endstück 9 ausgebildet ist. Die Falle 8 ist mit dem Fallen-Hängeeisen durch Einbringen der Falle 8 in die Durchgangsöffnung 10 des Hängeeisens 2 gekuppelt, wobei die Innenwand 11 der Öffnung 10 mit der Stirnseite 12 der Falle 8 zusammenwirkt. Diese Fläche fällt nach der Außenseite der Verbindung ab, wobei ihre Lage derart gewählt ist, daß das Einschieben der Falle 8 bei abgelenkter Lage des Verbinders 1 möglich ist und gleichzeitig das Herausschlüpfen der Falle 8 aus der Öffnung 10 in der Lage verhindert, in der der Verbinder 1 durch sein Feststell-Endstück mit dem Feststell-Hängeeisen 3 gekuppelt ist. Innere, flanschartig abgesetzte Wände 13 und 14 der Anstauchungen des Verbinders 1 sowie damit zusammenhängende Wände 15 und 16 der Hängeeisen 2 und 3 verlaufen schräg im Verhältnis zur Teilungsebene 17 der Rinnen 6 und 7 und weisen eine Konvergenz in dieser Richtung auf.

Das Feststell-Endstück 9 des Verbinders 1, welches in einem durchgehenden Sitz 18 des Feststell-Hängeeisens 3 gegen ein selbsttätiges Herausschlüpfen aus dem Sitz 18 durch ein elastisches Formstück 19, welches an diesem Endstück 9 angebracht ist, derart gesichert ist, daß die freie Länge a des Endstücks 9 einschließlich des Formstücks 19 größer ist als die äußere Länge des Sitzes 18. Das elastische Formstück 19 ist in dem Sitz 18 des Hängeeisens 3 mittels des angespitzten Endes 20 eines durch Hämmern geformten Kopfes 21, der in Richtung der etwas nach außen geneigten Wand 22 des Sitzes 18 gerichtet ist, untergebracht. Der Verbinder 1 hat einen annähernd trapezförmigen Querschnitt, wobei das Trapez seines Schaftes 23 mit der schmaleren Basis in Richtung des Innern der Rinnen 6 und 7 und die Trapeze der Falle 8 und des Feststell-Endstücks 9 umgekehrt gerichtet sind. Das Fallen-Hängeeisen 2 ist fest mit der Seitenwand 4 der Rinne 6 verbunden und ragt in Richtung der benachbarten Rinne 7 über eine Länge w größer als das Gesamtspiel s des Verbinders 1 in den Hängeeisen 2 und 3 vor.

Die Verbindung gemäß der Erfindung kann in schweren Bergbau-Kratzförderern Anwendung finden, insbesondere unter den Bedingungen einer großen Gewinnungskonzentration und hoher Belastung des Förderers.

## Patentansprüche

1. Verbindung für die Rinnen (6, 7) eines Bergbau-Kratzförderers, der einen Profil-Verbinder (1) in Form eines verlängerten Schaftes (23) mit Anstauchungen an seinen beiden Enden zur Kupplung des Verbinders mit den Seitenwänden (4, 5) der Enden der zu verbindenden Rinnen aufweist, wobei eine Anstauchung eine Falle (8) und die andere ein Feststell-Endstück (9) darstellt und welche Anstauchungen an ihrer Schaftseite von ebenen mit dem Schaft Flanschansätze bildenden Wänden begrenzt sind, die zueinander konvergent in Richtung der Rinnenwand geneigt sind und zwei Fallen-Hängeeisen (2, 3) enthalten, von welchen jedes an den Seitenwänden der benachbarten Rinnen an dem Berührungsrand derselben befestigt ist und einen nach außen offenen Sitz aufweist, dessen Querschnittsform im wesentlichen aus einem Rechteck und aus einem an der Seite des benachbarten Hängeeisens angeordneten Trapez besteht, dadurch gekennzeichnet, daß die Stirnseite (12) der Falle (8) Keilform hat und mit der Seitenwand der Rinne (6) an der Seite der Teilungsebene (17) einen spitzen Winkel bildet, und das Feststell-Endstück (9) an der Seite der Wand (22) des Sitzes (18) des Hängeeisens (3) eine zur Seitenwand der Rinne (7) parallele Ausnehmung aufweist, in der ein elastisches, sich an der Wand (22) abstützendes Formstück (19) sitzt, wobei die Wände (15 und 16) der Hängeeisen (2 und 3) gegen die Seitenwände der Rinnen (6 und 7) in deren Richtung konvergent und die Wände (11 und 22) zu diesen Seitenwänden divergent geneigt sind.

2. Verbindung nach Anspruch 1, dadurch gekennzeichnet, daß das elastische Formstück (19) mittels des angespitzten Endes (20) seines Kopfes (21) an der Wand (22) anliegt.

**Claims**

1. Joint for the channels (6, 7) of a mining scraper chain conveyor which has a profiled connector (1) in the form of an elongate shank (23) having upsets at its two ends for coupling of the connector to the side walls (4, 5) of the ends of the channels to be connected, one upset providing a catch (8) and the other providing a locating end piece (9), and which upsets are bounded on their shank side by walls forming flange attachments level with the shank, which walls are inclined to one another converging in the direction of the channel wall and contain two catch hangers (2, 3) by which each is secured on the side walls of the neighboring channels on the contact edge of the same and has an outwardly open seat whose cross-sectional form consists substantially of a square and of a trapezium arranged on the side of the neighboring hanger, characterised in that the front side (12) of the catch (8) has a wedge shape and forms a sharp angle with the side wall of the channel (6) on the side of the partial plane (17), and the locating end piece (9) has on the side of the wall (22) of the seat (18) of the hanger (3) a recess parallel to the side wall of the channel (7) in which is located an elastic molded element (19) supported on the wall (22), the walls (15 and 16) of the hangers (2 and 3) being inclined to be convergent towards the side walls of the channels (6 and 7) and the walls (11 and 22) being inclined to be divergent to these side walls.

2. Joint according to claim 1 characterised in that the elastic molded element (19) lies against the wall (22) by means of the pointed end (20) of its head (21).

**Revendications**

1. Dispositif de raccordement pour les bacs (6, 7) d'un convoyeur minier à raclettes, comprenant une pièce de raccordement ou attache profilée (1) sous forme d'une tige (23) prolongée à ses deux extrémités de portions refoulées ou têtes pour accoupler l'attache aux parois latérales (4, 5) des extrémités des bacs à raccorder, dont une tête représente une clenche (8) et l'autre une tête de blocage (9), les têtes étant délimitées côté tige par des faces planes qui forment des protubérances semblables à des brides sur la tige et qui convergent en direction de la paroi des bacs, le dispositif comprenant en outre deux pièces ou fers d'accrochage (2, 3) fixés aux parois latérales des bacs, dans la région où les bacs se touchent, qui présentent chacun un logement ouvert vers l'extérieur et destiné à recevoir une tête de l'attache, dont la forme en section droite est constituée essentiellement d'un rectangle et d'un trapèze disposé du côté du fer d'accrochage voisin, caractérisé en ce que le côté avant (12) de la clenche (8) est en forme de coin et fait un angle aigu avec la paroi latérale du bac (6) du côté du plan de joint (17) des bacs et la tête de blocage (9) présente, du côté de la face arrière (22) du logement (18) du fer d'accrochage (3) dans lequel elle est reçue, un évidement qui est parallèle à la paroi latérale du bac (7) et dans lequel est placée une pièce élastique façonnée (19) appuyée sur ladite paroi arrière (22), les faces avant (15, 16) des logements formés par les fers d'accrochage (2, 3) convergent en direction des parois latérales des bacs (6, 7) et leurs faces arrière (11, 22) ou fonds divergeant vers ces parois.

2. Dispositif de raccordement selon la revendication 1, caractérisé en ce que la pièce élastique façonnée (19) est appliquée contre la face arrière (22) du logement par un contact ponctuel (20) à l'extrémité d'une tête (21) de cette pièce.

**Fig.1**

**Fig.2**

Fig.3

Fig.4